## Europäisches Patentamt
## European Patent Office
## Office européen des brevets

(19)

(11) Veröffentlichungsnummer: **0 115 310**
**A1**

(12) # EUROPÄISCHE PATENTANMELDUNG

(21) Anmeldenummer: **84100624.0**

(22) Anmeldetag: **20.01.84**

(51) Int. Cl.³: **F 16 F 9/06**
**F 16 F 9/36**

(30) Priorität: **28.01.83 DE 3302858**

(43) Veröffentlichungstag der Anmeldung:
**08.08.84 Patentblatt 84/32**

(84) Benannte Vertragsstaaten:
**AT BE CH FR GB IT LI LU NL SE**

(71) Anmelder: **Hahn, Günther**
**Waldstrasse 43**
**D-7307 Aichwald 3(DE)**

(72) Erfinder: **Hahn, Günther**
**Waldstrasse 43**
**D-7307 Aichwald 3(DE)**

(74) Vertreter: **Rüger, Rudolf, Dr.-Ing. et al,**
**Webergasse 3 Postfach 348**
**D-7300 Esslingen/Neckar(DE)**

(54) **Gaszugfeder.**

(57) Eine Gaszugfeder (1) enthält ein zylindrisches Innenrohr (3), das einen Zylinder für einen darin längsverschieblich geführten, eine Kolbenstange (5) tragenden Arbeitskolben (4) bildet, dessen Kolbenstange (5) abgedichtet herausgeführt ist. Das innere Rohr (3) ist von einem äußeren Rohr (2) umgeben und bildet mit diesem zusammen einen zylindrischen Ringspalt (27), der an dem kolbenstangenseitigen Ende mit dem von dem inneren Rohr (3) gebildeten Zylinder strömungsmäßig verbunden ist. Hierbei befindet sich in dem Ringspalt eine unter Druck stehende Gasfüllung.

Um einen möglichst großen Kolbenhub und eine weitgehend totwegfreie Dämpferwirkung zu erzielen, befindet sich in dem Ringspalt ein ringförmiger Kolben (28), der sowohl gegen das innere als auch gegen das äußere Rohr (3,2) abgedichtet ist und die Gasfüllung von einer Ölfüllung trennt, die sich in dem durch den Ringkolben (28) abgetrennten Teil (276) des Ringspaltes (27) befindet, der strömungsmäßig mit dem Innenraum des inneren Rohres (3) in Verbindung steht, wobei der Raum zwischen dem Arbeitskolben (4) und dem kolbenstangenseitigen Ende des inneren Rohres (3) ebenfalls mit Öl gefüllt ist.

./...

Fig. 1

-1-

## Gaszugfeder

Die Erfindung geht aus von einer Gaszugfeder mit einem zylindrischen Innenrohr, das einen Zylinder für einen darin längsverschieblich geführten, eine Kolbenstange tragenden Arbeitskolben bildet, dessen Kolbenstange abgedichtet herausgeführt ist, mit einem das innere Rohr umgebenden äußeren Rohr, das mit dem inneren Rohr einen beidends abgedichteten Ringspalt bildet, der an seinem kolbenstangenseitigen Ende mit dem von dem inneren Rohr gebildeten Zylinder strömungsmäßig verbunden ist, sowie mit einer unter Druck stehenden Gasfüllung.

Aus dem DE-GM 19 92 800 ist eine derartige gedämpfte Gaszugfeder bekannt, bei der der in dem inneren Rohr gleitende Kolben eine zylindrische Verlängerung aufweist, die sich, bezogen auf die Kolbenstange, in der entgegengesetzten Richtung erstreckt und gasdicht durch einen in dem inneren Rohr angeordneten Dichtstopfen herausgeführt ist. Der Dichtstopfen sitzt bezüglich der Längserstreckung des inneren Rohres etwa in der Mitte und ist dort ortsfest verankert. Mittels einer kalibrierten Bohrung in dem Kolben sind die Zylinderräume zu beiden Seiten des Kolbens strömungsmäßig verbunden, so daß die Gasfüllung beim Verschieben des Kolbens durch die kalibrierte Bohrung unter Ausübung einer Dämpferwirkung von einer Zylinderseite in die andere Zylinderseite strömen kann.

Die in dem zylindrischen Ringspalt zwischen dem äußeren und dem inneren Rohr befindliche Gasfüllung strömt über an dem kolbenseitigen Ende des inneren Rohres angeordnete Bohrungen in den Zylinder ein und verschiebt den Kolben in Richtung der Kolbenverlängerung, die einen größeren wirksamen Durchmesser aufweist als die ebenfalls abgedichtete längsverschiebliche Kolbenstange.

Da der Zylinderraum an der der Kolbenstange abgewandten Seite durch die in dem zugehörigen Stopfen gleitende Kolbenverlängerung abgedichtet ist, ist der bei dieser Gaszugfeder ausnutzbare Kolbenhub deutlich kleiner als die Hälfte der in Ruhe befindlichen Gaszugfeder mit eingezogener Kolbenstange. Außerdem sind sowohl an der Kolbenstange als auch an der Kolbenverlängerung nur verhältnismäßig schwer und aufwendig zu beherrschende trockene Dichtungen erforderlich, oder es werden weitere Ölräume benötigt, die den ausnutzbaren Hub spürbar weiter verringern.

Im voll ausgezogenen Zustand ist auch die Dämpfungswirkung unbefriedigend, weil das Volumen hinter dem Kolben verhältnismäßig groß ist und beim Loslassen der Kolbenstange komprimiert wird, ehe eine dämpfende Gasströmung durch die kalibrierte Bohrung in dem Kolben auftritt.

Ausgehend hiervon ist es Aufgabe der Erfindung, eine Gaszugfeder mit Dämpfungswirkung zu schaffen, die einen größeren nutzbaren Kolbenhub aufweist und leichter abzudichten ist.

Die Gaszugfeder zur Lösung dieser Aufgabe ist erfindungsgemäß durch die Merkmale des Hauptanspruches gekennzeichnet.

Dabei hat die verwendete Ölfüllung den Vorzug, daß bei der Federbetätigung sämtliche beweg-lichen Dichtflächen mit Öl benetzt werden, wo-durch die einzelnen Dichtungen sehr einfach gestaltet werden können. Darüber hinaus ver-meidet die Ölfüllung wegen ihrer Inkompressi-bilität einen Totweg in der Dämpfungswirkung.

Eine einfache Fertigung und Montage werden erhalten, wenn in dem der Kolbenstange abgewandten Ende in das äußere Rohr ein Stopfen abgedichtet eingesetzt ist, der ebenfalls gegen das innere Rohr abgedichtet ist.

Um ein mögliches Auffüllen des hinter dem Kolben liegenden Zylinderraums mit Sicher-heit auszuschließen, enthält zweckmäßiger-weise der Stopfen eine Belüftungsöffnung für das innere Rohr.

Eine einfache Abdichtung des inneren Rohres gegen den Stopfen wird erhalten, wenn der Stopfen einen zylindrischen Fortsatz trägt, der abgedichtet, bspw. unter Verwendung von O-Ringen, in dem inneren Rohr sitzt.

Einfache Konstruktionsverhältnisse für das kolbenstangenseitige Ende der Gaszugfeder werden erhalten, wenn dort das innere Rohr kürzer als das äußere Rohr ausgebildet ist und in das äußere Rohr an dem kolbenstangenseitigen Ende eine  eine Durchgangsbohrung für die Kolbenstange aufweisende Zentrierscheibe eingesetzt ist, die mit einem zylindrischen Fortsatz in dem inneren Rohr sitzt und das innere Rohr konzentrisch zu dem äußeren Rohr hält, an dessen Innenwand sie im wesentlichen dichtend anliegt. Die zur Erzeugung der Dämpfungswirkung erforderliche kalibrierte Öffnung ist zweckmäßigerweise in der Zentrierscheibe angebracht, derart, daß der zylindrische Ringspalt mit dem inneren Rohr über die kalibrierte Bohrung sowie den zwischen der Kolbenstange und der Durchgangsbohrung in der Zentrierscheibe bestehenden Zylinderspalt strömungsmäßig verbunden ist.

Eine über lange Zeit stabile Abdichtung zwischen der Zentrierscheibe und dem äußeren Rohr ist entbehrlich, wenn in dem kolbenstangenseitigen Ende des äußeren Rohres ein eine Durchgangsbohrung für die Kolbenstange enthaltender Stopfen abgedichtet sitzt, der eine Dichtung für die Kolbenstange trägt. Hierbei wird eine weitere Vereinfachung dadurch erhalten, daß der kolbenstangenseitige Stopfen an der Zentrierscheibe anliegt und diese gegen das Ende des inneren Rohres drückt.

Längentoleranzen zwischen dem inneren und dem äußeren Rohr können beim Zusammensetzen der Gaszugfeder ohne das Auftreten gefährlicher Stauchungen des inneren Rohres dadurch vermieden werden, daß der zylindrische Fortsatz mit einem vorbestimmten Radius in die Zentrierscheibe übergeht.

In der Zeichnung ist ein Ausführungsbeispiel des Gegenstandes der Erfindung dargestellt. Es zeigen:

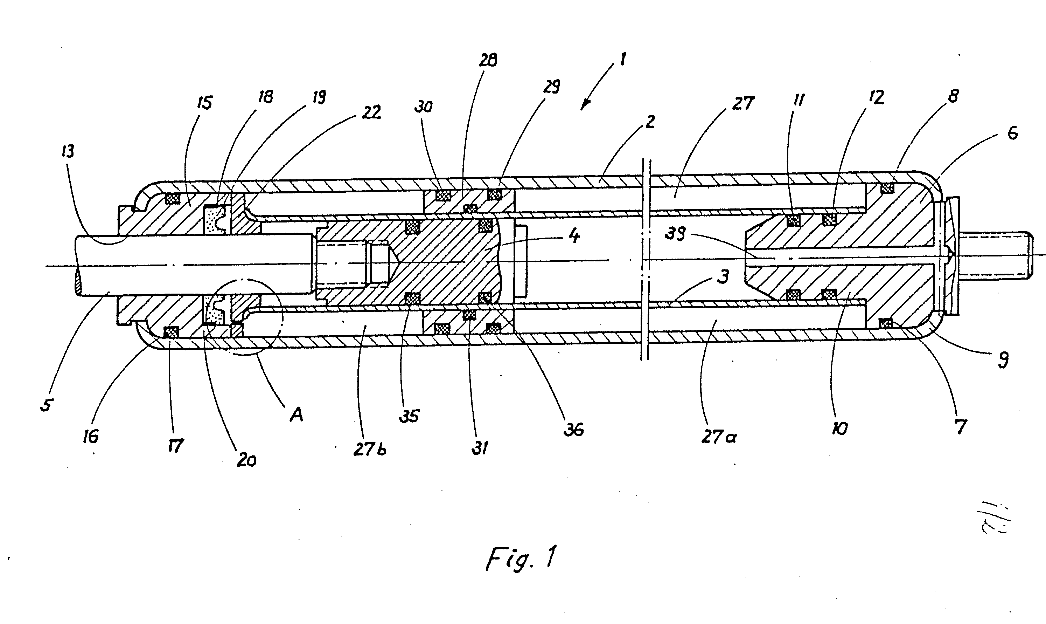

Fig. 1   eine erfindungsgemäße Gaszugfeder in einem Längsschnitt und

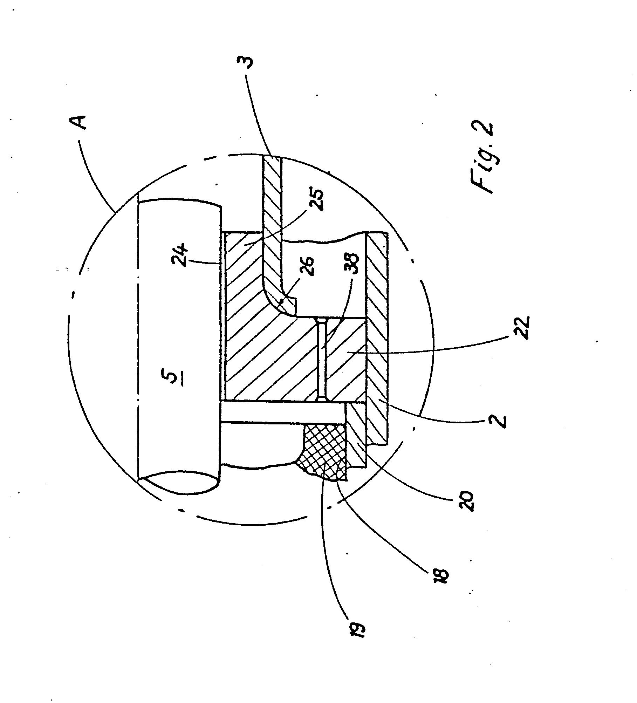

Fig. 2   den bei A aus Fig. 1 bezeichneten Bereich in einer vergrößerten Teilansicht.

In der Figur ist eine Gaszugfeder 1 veranschaulicht, die ein äußeres Rohr 2 aufweist, in dem konzentrisch ein inneres Rohr 3 angeordnet ist. Das innere Rohr 3 bildet einen Zylinder für einen darin längsverschieblich abgedichtet geführten Kolben 4, der einenends eine Kolbenstange 5 trägt.

An dem der Kolbenstange 5 abgewandten Ende der Gaszugfeder 1 sitzt in dem äußeren Rohr 2 ein Stopfen 6 , der mittels eines in eine eingestochene Nut 7 eingelegten O-Ringes 8 gegen die Innenwand des äußeren Rohres 2 abgedichtet ist. Das äußere Rohr 2 ist hinter dem Stopfen 6 bei 9 nach innen zu umgebördelt, wodurch der Stopfen 6 in dem äußeren Rohr 2 gesichert ist. An seiner nach innen weisenden Stirnseite trägt der Stopfen 6 einen zylindrischen, zu dem äußeren Rohr 2 konzentrischen Fortsatz 10, der in das innere Rohr 3 hineinragt und es an dem der Kolbenstange abgewandten Ende in dem äußeren Rohr zentriert. Der Fortsatz 10 ist ebenfalls wiederum mittels zweier in entsprechende Nuten eingesetzte O-Ringe 11 und 12 gegen die Innenseite des inneren Rohres 3 abgedichtet.

An dem kolbenstangenseitigen Ende sitzt in dem äußeren Rohr 2 abgedichtet ein mit einer Durchgangsbohrung 13 für die Kolbenstange 5 versehener Stopfen 15, der wiederum durch Umbördeln des stirnseitigen Randes des äußeren Rohres 2 gehalten ist. Die Abdichtung des Stopfens 15 erfolgt mittels eines in eine Nut 16 eingesetzten O-Rings 17.

-7-

An seiner nach innen weisenden Stirnseite enthält der Stopfen 15 eine Ausdrehung 18, in der eine elastische Lippendichtung 19 zur Abdichtung der Kolbenstange 5 in dem Stopfen 15 eingepreßt ist.

Der an dem Stopfen 15 durch die Ausdrehung 18 entstandene zylinderförmige Rand 20 weist eine plane Stirnfläche auf, die gegen eine stramm in das äußere Rohr 2 eingepaßte runde Zentrierscheibe 22 drückt. Die Zentrierscheibe 22 enthält eine Durchgangsbohrung 23 für die Kolbenstange 5, wobei der Durchmesser der Durchgangsbohrung 23 deutlich größer ist als der Durchmesser der zylindrischen Kolbenstange 5, so daß sich zwischen der Kolbenstange 5 und der Durchgangsbohrung 23 ein zylindrischer Spalt 24 bildet, wie dies in der Ausschnittsdarstellung bei A gezeigt ist.

An die Zentrierscheibe 22 ist einstückig ein zylindrischer konzentrischer Fortsatz 25 angeformt, dessen Außendurchmesser dem Innendurchmesser des inneren Rohres 3 entspricht und der an dem kolbenstangenseitigen Ende der Gaszugfeder 1 in das innere Rohr 3 hineinragt und es an diesem Ende in dem äußeren Rohr 2 zentriert. Die an dem Übergangsbereich zwischen dem zylindrischen Fortsatz 25 und der Zentrierscheibe 22 gebildete Hohlkehle ist unter einem vorbestimmten Radius 26 abgerundet und erleichtert auf diese Weise ein trichterförmiges Umbiegen des inneren Rohres 3 in diesem Bereich beim Einpressen der Zentrierscheibe 22.

Das äußere Rohr 22 begrenzt zusammen mit dem konzentrisch darin angeordneten inneren Rohr einen zylindrischen Ringspalt 27, der einenends durch den Stopfen 6 und andernends durch die Zentrierscheibe 22 abgeschlossen ist. In dem Ringspalt 27 ist ein ringförmiger Kolben 28 längsverschieblich angeordnet, der mittels in entsprechenden Nuten sitzender O-Ringe 29 und 30 gegen die Innenseite des äußeren Rohres 2 und mittels eines in einer zugehörigen Nut sitzenden O-Rings 31 gegen die Außenseite des inneren Rohres 3 abgedichtet ist. Auf diese Weise ist der Ringspalt 27 in zwei voneinander getrennte Räume 27a, 27b variablen Volumens aufgeteilt, von denen der zwischen dem Kolben 28 und dem Stopfen 6 befindliche Raum 27a des Ringspaltes 27 mit unter hohem Druck stehendem Gas gefüllt ist, während der Raum 27b des Ringspaltes 27 zwischen der Zentrierscheibe 22 und dem Kolben 28 mit Öl gefüllt ist. Mit Öl ist ferner der kolbenstangenseitige Raum vor dem Arbeitskolben 4 gefüllt, wobei das Öl bei einer Verschiebung des mittels O-Ringen 35 und 36 in dem inneren Rohr 3 abgedichteten Arbeitskolben 4 aus dem Zylinderraum durch den Ringspalt 24 zwischen der Kolbenstange 5 und der Zentrierscheibe 22 bzw. dem Fortsatz 25 in die Ausdrehung 18 und von dort über wenigstens eine kalibrierte Bohrung 38 in der Zentrierscheibe 22 in den Ringspalt 27 bzw. von dort zurückströmen kann. Die kalibrierte Bohrung 38 ist zu diesem Zweck als Durchgangsbohrung ausgebildet und verläuft so, daß sie einenends in dem Ringspalt 27 mündet und andernends in der Ausdrehung 18 des Stopfens 15, und zwar so, daß die Bohrung 38 nicht durch die Lippendichtung 19 verlegt werden kann.

Da beim Zusammenbau der insoweit beschriebenen Gaszugfeder kein engtolerierter Abstand zwischen den Stopfen 6 und 15 beim Zusammenbördeln des äußeren Rohres 2 sichergestellt werden kann, würde ohne die unter dem Radius 26 abgerundete Hohlkehle entweder das innere Rohr 3 axiale Luft haben und möglicherweise bei einer Betätigung des Arbeitskolbens 4 bzw. des Kolbens 28 hin- und herrutschen, was die O-Ringe 11 und 12 beschädigt, oder das innere Rohr 3 würde möglicherweise unter einer hohen Druckspannung stehen, wenn es länger ist als der Abstand zwischen dem Stopfen 6 und der Zentrierscheibe 22 nach dem Umbördeln des äußeren Rohres 2. Da jedoch die Hohlkehle unter dem Radius 26 abgerundet ist, kann des innere Rohr 3 für den größten möglicherweise auftretenden Abstand zwischen dem Stopfen 6 und der Zentrierscheibe 22 bemessen werden, wobei es sich dann bei kürzeren Abständen durch Aufbördeln des Randes aufgrund der abgerundeten Hohlkehle zwischen dem Fortsatz 25 und der Zentrierscheibe 22 selbsttätig an den jeweils erzielten Abstand zwischen der Zentrierscheibe 22 und dem Stopfen 6 anpaßt. Auf diese Weise wird sichergestellt, daß die Stopfen 6 und 15 sowie die Zentrierscheibe 22 zwischen dem endseitig umgebördelten äußeren Rohr 2 sowie dem inneren Rohr 3 ständig spielfrei verspannt sind.

Die insoweit beschriebene Gaszugfeder 1 wirkt in der Weise, daß das Gas in dem Ringspalt 27, das sich zwischen dem Kolben 28 und dem Stopfen 6 befindet, nämlich in dem Ringspaltabschnitt 27a, den Kolben 28 in dem Ringspalt 27 vollständig in Richtung auf das kolbenstangenseitige Ende verschiebt. Hierdurch wird das auf der anderen Seite des Kolbens 28 in dem Ringspalt 27 befindliche Öl, nämlich das Öl, das sich in dem Ringspaltabschnitt 27e befindet, durch die kalibrierte Bohrung 38 sowie den zylindrischen Spalt 24 in das innere Rohr 3 gepreßt, wodurch sich der Arbeitskolben 4 in Richtung des Stopfens 6 bewegt und die Kolbenstange 5 hereinzieht. Wirkt hingegen auf die Kolbenstange 5 eine Zugkraft, so wird das Öl von dem Arbeitskolben 4 aus dem Zylinderraum, d.h. dem Innern des inneren Rohres 3, verdrängt und strömt wiederum durch den Zylinderspalt 24, die kalibrierte Bohrung 38 in den Ringspaltabschnitt 27b, wodurch der Kolben 28 nach rechts verschoben wird und das Gas in dem Ringspaltabschnitt 27a komprimiert.

Die Dämpfungswirkung entsteht dabei im wesentlichen aufgrund des Strömungswiderstandes des Öls in der kalibrierten Bohrung 38, während der Zylinderspalt 24 keinen nennenswerten Strömungswiderstand darstellt, um auf diese Weise leicht definierte Verhältnisse zu erhalten.

Es ist ersichtlich, daß bei der veranschaulichten Gaszugfeder 1 im Betrieb ständig alle gegeneinander sich bewegenden Dichtflächen mit Öl benetzt werden, was zum einen die Dichtwirkung verbessert und zum andern die Standzeit aller

-11-

beteiligten sich bewegenden Dichtungen erhöht. Die trockenen Dichtungen, wie sie die O-Ringe 8,11,12 und 17 darstellen, befinden sich dagegen in Ruhe und werden somit nicht beansprucht.

Um zu vermeiden, daß sich in dem Raum zwischen dem Arbeitskolben 4 und dem Stopfen 6 aufgrund von Leckagen oder anderen Effekten allmählich mit Gas füllt, enthält der Stopfen 6 eine nach außen führende Belüftungsöffnung 39, die das Innere des inneren Rohres 3, das sich hinter dem Arbeitskolben 4 befindet, zur Atmosphäre hin entlüftet.

-12-

<u>Patentansprüche</u>

1. Gaszugfeder mit einem zylindrischen Innenrohr, das einen Zylinder für einen darin längsverschieblich geführten, eine Kolbenstange tragenden Arbeitskolben bildet, dessen Kolbenstange abgedichtet herausgeführt ist, mit einem das innere Rohr umgebenden äußeren Rohr, das mit dem inneren Rohr einen beidenends abgedichteten zylindrischen Ringspalt bildet, der an seinem kolbenstangenseitigen Ende mit dem von dem inneren Rohr gebildeten Zylinder strömungsmäßig verbunden ist, sowie mit einer unter Druck stehenden Gasfüllung, dadurch gekennzeichnet, daß in dem Ringspalt (27) ein ringförmiger Kolben (28) angeordnet ist, der sowohl gegen das innere als auch gegen das äußere Rohr (3, 2) abgedichtet ist und die Gasfüllung in dem Ringspalt (27) von einer Ölfüllung trennt, die sich in dem durch den Ringkolben (28) abgetrennten Teil (27b) des Ringspaltes (27) befindet, der strömungsmäßig mit dem Innenraum des inneren Rohres (3) in Verbindung steht, und daß der Raum zwischen dem Arbeitskolben (4) und dem kolbenstangenseitigen Ende des inneren Rohres (3) ebenfalls mit Öl gefüllt ist.

-13-

2. Gaszugfeder nach Anspruch 1, dadurch gekennzeichnet, daß in dem der Kolbenstange (5) abgewandten Ende des äußeren Rohres (2) ein Stopfen (6) abgedichtet eingesetzt ist, der ebenfalls gegen das innere Rohr (3) abgedichtet ist.

3. Gaszugfeder nach Anspruch 2, dadurch gekennzeichnet, daß der Stopfen (6) eine Belüftungsöffnung (39) für das innere Rohr (3) aufweist.

4. Gaszugfeder nach Anspruch 2, dadurch gekennzeichnet, daß der Stopfen (6) zur Abdichtung gegen das innere Rohr (3) einen zylindrischen Fortsatz (10) trägt, der abgedichtet in dem inneren Rohr (3) steckt.

5. Gaszugfeder nach Anspruch 1, dadurch gekennzeichnet, daß das innere Rohr (3) an dem kolbenstangenseitigen Ende kürzer als das äußere Rohr (2) ausgebildet ist und daß in das äußere Rohr (3) an dem kolbenstangenseitigen Ende eine eine Durchgangsbohrung (23) für die Kolbenstange (5) aufweisende Zentrierscheibe (22) eingesetzt ist, die mit einem zylindrischen Fortsatz (25) in dem inneren Rohr (3) sitzt und das innere Rohr (3) konzentrisch zu dem äußeren Rohr (2) hält, an dessen Innenwand sie im wesentlichen dichtend anliegt.

6. Gaszugfeder nach Anspruch 5, dadurch gekennzeichnet, daß die Zentrierscheibe (22) zumindest eine kalibrierte Bohrung (38) enthält, über die der zylindrische Ringspalt (27) mit dem durch das innere Rohr (3) und den Arbeitskolben (4) begrenzten Zylinderraum verbunden ist und durch die das Öl bei der Betätigung des Arbeitskolbens (4) unter Ausübung einer Dämpferwirkung fließt.

7. Gaszugfeder nach Anspruch 1, dadurch gekennzeichnet, daß in dem kolbenstangenseitigen Ende des äußeren Rohres (2) ein eine Durchgangsbohrung (13) für die Kolbenstange (5) enthaltender Stopfen (15) abgedichtet sitzt, der eine Dichtung (19) für die Kolbenstange (5) trägt.

8. Gaszugfeder nach den Ansprüchen 5 und 7, dadurch gekennzeichnet, daß der kolbenstangenseitige Stopfen (15) an der Zentrierscheibe (22) anliegt und diese gegen das entsprechende Ende des inneren Rohres (3) drückt.

9. Gaszugfeder nach Anspruch 5, dadurch gekennzeichnet, daß der zylindrische Fortsatz (25) mit einem vorbestimmten Radius (26) in die Zentrierscheibe (22) übergeht.

Fig. 1

Fig. 2

**Europäisches
Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 256 960 (WILDE & SPIETH) <br> * Insgesamt * <br><br> --- | 1-8 | F 16 F 9/06 <br> F 16 F 9/36 |
| A | DE-A-1 800 096 (ORUS AG) <br><br> --- | 1 | |
| A,D | DE-U-1 992 800 (STABILUS) <br><br> ----- | | |

RECHERCHIERTE
SACHGEBIETE (Int. Cl. ³)

F 16 F
B 64 C

*Der vorliegende Recherchenbericht wurde für alle Patentansprüche erstellt.*

| Recherchenort <br> DEN HAAG | Abschlußdatum der Recherche <br> 26-03-1984 | Prüfer <br> CINQUANTINI B. |
|---|---|---|